# DEMANDE DE BREVET EUROPEEN

(11) **EP 2 148 275 A1**
(43) Date de publication de la demande: **27.01.2010**
(21) Numéro de dépôt: 09165701.5
(22) Date de dépôt: 16.07.2009
(51) Int. Cl.: G06F 9/44, H04L 12/24, H04L 12/66, H04L 29/08

(54) **Gestion de passerelle residentielle**

(30) Priorité: 25.07.2008 FR 0855107
(71) Demandeur: FRANCE TELECOM, 75015 Paris (FR)
(72) Inventeur: Boucadair, Mohamed, 35000, RENNES (FR); Noisette, Yoann, 14320, MAY SUR ORNE (FR)

(57) **Abrégé**

L'invention concerne une passerelle (P1) d'accès à un réseau de communication (R1), apte à être connectée à au moins un équipement (T1-T5) formant avec ladite passerelle un réseau local (R2) et à offrir un accès à au moins un service au sein dudit réseau local.

Une telle passerelle comprend:
- des moyens (L1) de gestion de fonctions d'accès audit au moins un service et de fonctions de configuration de ladite passerelle;
- et au moins un module d'interface (I1) au travers duquel un utilisateur (U1) de ladite passerelle est apte à commander lesdits moyens de gestion.

## Description

### 1. Domaine de l'invention

Le domaine de l'invention est celui des passerelles interconnectant deux réseaux de communication, notamment un réseau local privé de type LAN (pour "Local Area Network") et un réseau plus étendu de type MAN (pour "Metropolitan Area Network") ou WAN (pour "Wide Area Network"), tel qu'un réseau de communication public. De telles passerelles sont généralement appelées "passerelles résidentielles" ou "passerelles domestiques", mais leur usage n'est pas restreint au cadre des habitations et peut également s'envisager dans le cadre d'entreprises, d'associations, de lieux publics, etc. Néanmoins, par souci de simplification, dans toute la suite de ce document, on désignera de telles passerelles sous le terme de "passerelles résidentielles", quel que soit leur contexte d'utilisation.

L'invention s'applique notamment, mais non exclusivement, aux passerelles résidentielles destinées au grand public, et plus particulièrement, parmi celles-ci, aux passerelles résidentielles permettant l'accès aux offres de services IP (pour l'anglais "Internet Protocol") dites "Multi-Play". De telles offres "multi play" sont de plus en plus fréquemment proposées par les opérateurs ou fournisseurs d'accès internet (FAI) à leurs abonnés, et consistent à leur proposer de souscrire conjointement à plusieurs services, comme par exemple la téléphonie sur IP, la télévision sur IP, et l'accès à Internet, etc.

Dans la suite de ce document, on s'attache à présenter l'invention dans ce contexte particulier des passerelles résidentielles permettant aux utilisateurs d'accéder aux offres multi-services proposées par leurs fournisseurs d'accès et de service Internet. On notera cependant que les caractéristiques de l'invention peuvent avantageusement être appliquées à tout autre type de passerelle d'accès à un réseau de communication.

### 2. Art antérieur et ses inconvénients

Un nombre croissant de clients des opérateurs de télécommunications et des fournisseurs d'accès au réseau Internet est équipé d'une passerelle résidentielle, souvent appelée "box" ou "HGW" (pour Home Gateway). Cet équipement, installé chez le client, est l'élément concentrateur de l'ensemble des connexions, services et applicatifs fournis par l'opérateur (dans un cas général, la « box » peut être le point concentrateur de plusieurs services offerts par une pluralité de fournisseurs de service et non pas un seul fournisseur). En effet, comme son nom l'indique, il représente une véritable passerelle (ou encore relais) entre le réseau du fournisseur d'accès et/ou de services et le réseau domestique du client lui-même.

La passerelle est en effet raccordée, d'une part, au réseau de l'opérateur, et présente, d'autre part, un ensemble d'interfaces, sans fil ou filaires, permettant la connexion d'une pluralité de terminaux, tels que par exemple un ordinateur, un téléphone, un téléviseur numérique, etc.

Elle gère par ailleurs l'ensemble des services souscrits par le client auprès de l'opérateur (e.g. téléphonie, télévision, connexion Internet) ainsi que des fonctionnalités avancées telles que la configuration des règles de NAT (pour "Network Address Translator") ou de pare-feu, etc.

Malgré leur présence de plus en plus répandue chez les clients, et bien qu'elles constituent le noeud central de l'ensemble des services qu'ils utilisent quotidiennement, les passerelles résidentielles restent cependant des équipements méconnus, qui sont perçus comme des "boîtes noires" par la plupart des clients. Cette situation est en partie historique. Elle résulte notamment de ce que les passerelles résidentielles constituent une évolution des modems routeurs, que les fournisseurs d'accès et opérateurs ont progressivement enrichis de nouvelles fonctionnalités, sans pour autant songer à en accroître la convivialité.

Pour la plupart des passerelles résidentielles existantes, la gestion de ces fonctionnalités est accessible au client par l'intermédiaire d'une interface Web de configuration et d'administration, accessible en général d'une manière sécurisée (e.g. protégée par un mot de passe). Cette interface d'administration est accessible à une URL (*Uniform Resource Locator*) qui peut être sous forme d'une adresse prédéfinie, un identifiant et un mot de passe étant requis pour y accéder en mode administrateur. Une fois authentifié, le client peut alors avoir accès à un certain nombre de fonctionnalités permettant d'agir directement sur les services et connexions gérés par sa passerelle résidentielle.

Cette technique de gestion d'une passerelle résidentielle présente cependant de nombreux inconvénients.

Tout d'abord, elle impose au client de disposer d'un ordinateur connecté à la passerelle, par le biais duquel il peut accéder à l'interface Web d'administration. Or, certains clients souscrivent par exemple auprès de l'opérateur au seul service de téléphonie sur IP, ou à une offre conjointe de téléphonie et de télévision sur IP. S'ils ne disposent pas d'ordinateur, ils ne peuvent donc pas commander certaines fonctions simples de leur passerelle, telles que par exemple la désactivation d'une interface WiFi, ou le redémarrage du service de téléphonie en cas de problème.

En outre, l'interface Web d'administration de la passerelle résidentielle est généralement complexe d'utilisation et impose au client une maîtrise de l'outil informatique, ainsi que des termes techniques utilisés pour décrire les différents services et fonctionnalités de la passerelle. Une telle interface n'est donc pas adaptée au grand public.

Le document de brevet WO 03/085616, au nom des mêmes déposants que la présente demande de brevet, propose de télécommander une passerelle domestique au moyen d'un terminal mobile multimédia, se présentant sous la forme d'une plate-forme informatique portable, relié par une liaison sans fil à une passerelle domestique. Un tel terminal mobile multimédia est équipé d'un module de reconnaissance vocale et permet de transformer une commande vocale de l'utilisateur en un message de commande des équipements reliés à la passerelle résidentielle au sein du réseau local, ainsi que des fonctionnalités intrinsèques à la passerelle elle-même.

Si une telle solution permet aux utilisateurs non ou malvoyants de gérer certaines fonctions de leur passerelle résidentielle, elle nécessite, comme la solution précédente de l'art antérieur, de disposer d'un équipement spécifique pour ce faire.

Un tel équipement présente un coût supplémentaire pour le client, qui a souvent déjà du mal à comprendre le coût de la location ou de l'achat de la passerelle résidentielle, du fait de sa méconnaissance du rôle sensible joué par cet équipement.

En outre, un tel terminal mobile multimédia peut aisément être égaré dans la maison, de sorte que l'utilisateur ne l'a pas toujours à disposition lorsqu'il souhaite gérer une fonction particulière de sa passerelle.

Enfin, une telle solution ne contribue pas à valoriser le rôle de la passerelle résidentielle, qui reste conçue sous la forme d'une boîte noire, dont l'administration se fait nécessairement par le biais d'un équipement déporté. Une telle solution ne permet donc pas de faire percevoir au client le caractère stratégique de sa passerelle résidentielle, ni de lui faire prendre conscience qu'elle constitue le point névralgique de son réseau domestique. Elle reste un équipement méconnu, avec lequel l'abonné ne parvient pas à se familiariser.

Ainsi, dans ces différentes solutions de gestion de passerelles résidentielles de l'art antérieur, les fonctions et briques logicielles permettant une administration de la passerelle s'avèrent à la fois incomplètes, complexes et difficiles d'accès pour la plupart des clients.

### 3. Exposé de l'invention

L'invention ne présente pas ces inconvénients de l'art antérieur, puisqu'elle propose, selon un premier aspect, une passerelle d'accès à un réseau de communication, apte à être connectée à au moins un équipement formant avec ladite passerelle un réseau local et à offrir un accès à au moins un service au sein dudit réseau local, qui comprend:
- des moyens de gestion de fonctions d'accès audit au moins un service et de fonctions de configuration de ladite passerelle;
- et au moins un module d'interface au travers duquel un utilisateur de ladite passerelle est apte à commander lesdits moyens de gestion.

L'invention repose donc sur une approche tout à fait nouvelle et inventive de la gestion de la passerelle résidentielle, à qui elle redonne toute son importance au sein du réseau domestique de l'abonné. En effet, la passerelle de l'invention peut être aisément appréhendée par tout client grand public, qui est à même de gérer lui-même les fonctions proposées par la passerelle, sans besoin de connaissances techniques approfondies, et ce, grâce à la présence, dans la passerelle elle-même, de moyens de gestion de ces fonctions et d'une interface simple et conviviale par laquelle l'utilisateur peut commander ces moyens de gestion. La passerelle résidentielle de l'invention devient ainsi un équipement aussi bien intégré dans l'environnement résidentiel, et convivial, que les équipements multimédia de type chaînes hi-fi ou téléviseurs.

On notera que les fonctions visées dans le cadre de cette invention sont les fonctions d'accès aux services auxquels l'utilisateur est abonné, ainsi que les fonctions de configuration de la passerelle elle-même, i.e. les fonctionnalités permettant d'agir directement sur les services de niveau réseau et les connexions gérées par la passerelle résidentielle, et non les fonctions spécifiques aux services applicatifs eux-mêmes, qui ne sont pas prioritairement visées ici.

Grâce à la solution de l'invention, le client est désormais capable d'administrer sa passerelle, de façon simple et intuitive.

En outre, une telle conception de la passerelle résidentielle présente de nombreux avantages par rapport aux passerelles de type "boîte noire" de l'art antérieur. Notamment:
- les clients sont désormais plus à même de mieux appréhender tout dysfonctionnement de la passerelle ou de l'un des services auxquels ils accèdent via cette passerelle, ce qui réduit naturellement le nombre et la fréquence des appels des abonnés vers le Service Après Vente (SAV) de l'opérateur ou du fournisseur d'accès (FAI). Ceci permet de réduire, non seulement les coûts associés engagés par l'opérateur ou le FAI, mais également les coûts supportés par l'utilisateur pour appeler la "hotline", qui est souvent associée à un numéro surfacturé;
- les clients n'ont plus besoin de disposer d'un ordinateur de type PC, ou d'un équipement dédié, pour administrer leur passerelle, ce qui est particulièrement avantageux pour les clients qui n'ont souscrit par exemple qu'à des offres de téléphonie sur IP ou de télévision sur IP;
- la consommation électrique de la passerelle résidentielle peut être fortement réduite, grâce à un accès simple pour l'utilisateur, via le module d'interface, aux commandes des fonctions de la passerelle, qui lui permet par exemple de désactiver les interfaces de communication de la passerelle et les services non utilisés. Une telle réduction de la consommation électrique est un avantage, tant sur le plan environnemental, que sur le plan économique pour l'abonné;
- le client peut plus facilement résoudre (ou au minimum détecter) lui-même les incidences réseaux LAN;
- les clients peuvent enfin être rassurés quant aux risques inhérents aux ondes électromagnétiques, puisque, via le module d'interface, ils peuvent facilement désactiver les interfaces radio. Ainsi, par exemple, le client peut choisir de désactiver l'interface WiFi (marque déposée) ou Bluetooth (marque déposée) de la passerelle pendant la nuit ou adopter des modes d'activation similaires à la gestion quotidienne du chauffage domestique par exemple (mode Jour/Nuit, heures de présence à domicile, jours de semaine et weekend, etc.)

Les moyens de gestion intégrés dans la passerelle peuvent l'être sous forme d'un élément logiciel permettant à un utilisateur d'avoir accès aux fonctions inhérentes à la passerelle elle-même. Cet élément logiciel est alors rendu accessible simplement grâce à la mise en place au niveau de la passerelle des éléments d'interface nécessaires, comme détaillé dans la suite de ce document.

De tels moyens de gestion peuvent également être constitués en tout ou en partie d'éléments matériels.

Selon un mode de réalisation de l'invention, une telle passerelle d'accès comprend des moyens de réception d'informations de mise à jour appartenant au groupe comprenant:
- des informations de mise à jour desdits moyens de gestion;
- des informations de mise à jour dudit module d'interface.

De telles informations de mise à jour peuvent être reçues de l'opérateur ou du FAI. Elles s'avèrent particulièrement avantageuses en cas d'ajout de nouvelles fonctionnalités à la passerelle, pour permettre au client de commander également ces nouvelles fonctionnalités via le module d'interface. De telles fonctionnalités peuvent découler par exemple du développement du service souscrit par l'abonné (e.g. activation du service TV, partage d'imprimante, etc.).

Dans un mode de réalisation particulier de l'invention, une telle passerelle comprend des moyens de mémorisation d'au moins une commande effectuée par ledit utilisateur au travers dudit module d'interface.

Ainsi, la passerelle enregistre dans un espace mémoire dédié les opérations effectuées par le client au travers du module d'interface. Si le client contacte le SAV de l'opérateur ou du FAI pour diagnostiquer un problème rencontré sur son réseau domestique, ce dernier peut alors accéder à ces informations mémorisées, pour l'aider à identifier la cause du problème. Il peut en effet voir les opérations d'ores et déjà effectuées par le client pour résoudre le problème, et donc gagner du temps en évitant de les réitérer. Il peut également détecter quelle opération, ou quelle suite d'opérations, effectuée par le client aurait pu générer le problème.

Dans un mode de réalisation de l'invention, lesdits moyens de gestion sont également aptes à gérer une fonction de diagnostic d'un fonctionnement de ladite passerelle et de l'accès auxdits services.

Une telle fonction lance une opération de diagnostic de la passerelle, et fournit un bilan des différents services présents sur cette dernière, ce qui peut aider l'utilisateur à diagnostiquer un éventuel problème sur le réseau domestique. En cas d'anomalie identifiée, ce diagnostic peut être transféré, spontanément ou à l'initiative du client, vers l'opérateur ou le FAI, afin que ce dernier réagisse et résolve le problème.

Dans une première variante de réalisation de l'invention, ledit module d'interface comprend au moins un bouton de commande.

Ainsi, la passerelle peut présenter une pluralité de boutons associés aux différentes fonctions aptes à être commandées par les moyens de gestion. De tels boutons sont particulièrement simples d'utilisation pour le client. Il peut s'agir notamment de boutons "on/off" d'activation/désactivation des interfaces de communication de la passerelle.

Dans une deuxième variante de réalisation de l'invention, qui peut être combinée à la première variante ci-dessus, ledit module d'interface comprend un écran.

Un tel écran peut être un écran simple, qui peut alors être couplé aux boutons évoqués ci-dessus. Les boutons peuvent permettre par exemple de faire dérouler les fonctions disponibles sur l'écran, d'une part, et de procéder à l'arrêt, démarrage, redémarrage selon l'opération souhaitée, d'autre part.

Un tel écran présente l'avantage d'être particulièrement convivial pour l'utilisateur. En outre, le menu s'affichant sur l'écran peut être facilement mis à jour en cas de besoin, sans qu'il soit nécessaire de modifier les boutons figurant sur le boîtier de la passerelle. En effet, de tels boutons peuvent être qualifiés de transverses, en ce sens qu'ils correspondent à des opérations génériques du type monter/descendre dans le menu, démarrer, arrêter ou redémarrer un service, etc.

Il peut s'agir également d'un écran tactile avec interface graphique, particulièrement ergonomique pour l'utilisateur.

Dans une troisième variante de réalisation de l'invention, qui peut être combinée avec la première et/ou deuxième variante de réalisation ci-dessus, ledit module d'interface est un module de commande vocale.

Une telle solution est particulièrement avantageuse pour les utilisateurs malvoyants ou non-voyants.

On notera que l'ensemble des caractéristiques mentionnées ci-dessus peuvent avantageusement être combinées, en totalité ou en partie, au sein d'une même passerelle d'accès selon l'invention.

### 4. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente un exemple de passerelle d'accès selon l'invention, réalisant une interface entre le réseau Internet d'un opérateur et le réseau domestique d'un client;
- la figure 2 illustre les différents éléments fonctionnels de la passerelle de la figure 1 ;
- la figure 3 présente un exemple de module d'interface d'une passerelle conforme à l'invention, comprenant un écran tactile.

### 5. Description d'un mode de réalisation particulier de l'invention

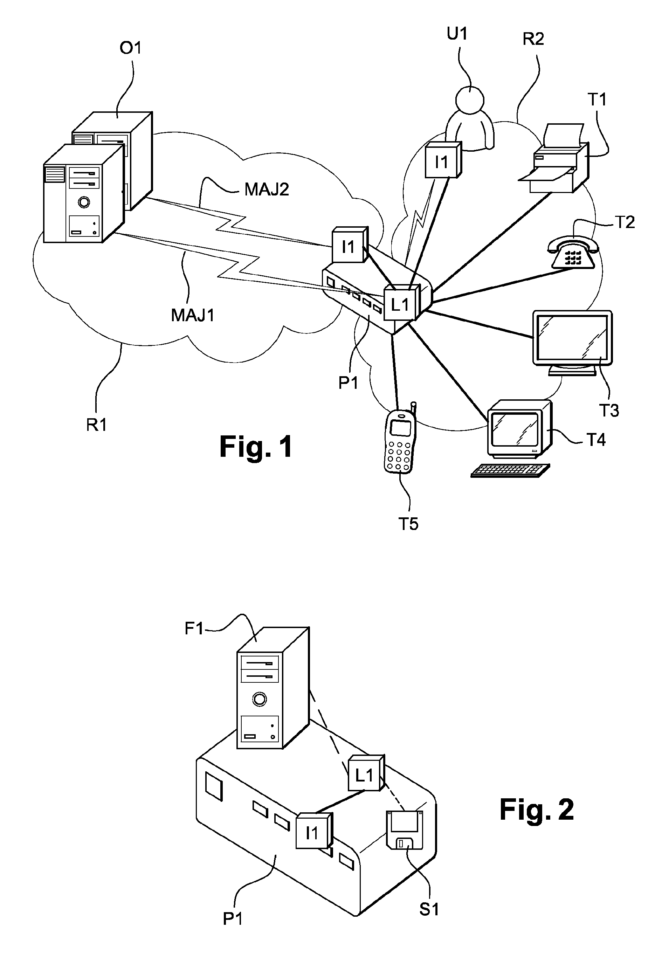

La figure 1 présente une passerelle résidentielle P1 jouant le rôle d'interface entre le réseau Internet R1, géré par un opérateur 01, et un réseau domestique R2, comprenant une pluralité de terminaux T1 à T5 connectés à la passerelle P1. De tels terminaux comprennent par exemple une imprimante T1, un téléphone sur IP T2, un téléviseur sur IP T3, un ordinateur T4 et un téléphone mobile T5.

Ces différents terminaux T1 à T5 sont connectés à la passerelle P1 par l'intermédiaire des différentes interfaces disponibles sur la passerelle, telles qu'une interface sans fil de type Bluetooth (marque déposée) ou WiFi, une prise RJ11 pour la téléphonie, une prise RJ45 pour la télévision numérique ou les ordinateurs, une prise USB (pour "Universal Serial Bus"), un port Ethernet, etc.

Un utilisateur U1 accède au travers d'un module d'interface 11 à un logiciel L1 intégré à la passerelle P1. Ce logiciel L1 permet de commander directement les fonctions inhérentes à la passerelle résidentielle P1 (e.g. connectivités, redémarrage, etc.). De telles fonctions (dont on rappelle qu'elles sont distinctes des fonctions des divers services applicatifs fournis par l'opérateur O1 au travers de la passerelle P1) peuvent être des fonctions dites basiques, présentes sur la majorité des passerelles résidentielles de manière intrinsèque, et des fonctions dites avancées, apprises ou activées en fonction de l'état de déploiement du service et des capacités de la passerelle.

On donne ci-dessous une liste illustrative, et non limitative, de fonctions susceptibles d'être commandées par le logiciel L1.

Parmi les fonctions dites basiques, on peut citer, à titre d'exemple, les fonctions suivantes:
- démarrage, arrêt ou redémarrage de la passerelle résidentielle P1;
- démarrage, arrêt ou redémarrage de la connexion au réseau Internet R1;
- démarrage, arrêt ou redémarrage d'une interface sans fil WiFi de la passerelle P1;
- démarrage, arrêt ou redémarrage d'une interface Ethernet de la passerelle P1;
- démarrage, arrêt ou redémarrage du service d'adressage automatique (DHCP pour "Dynamic Host Configuration Protocol"), par lequel la passerelle P1 affecte automatiquement des adresses IP à des équipements connectés à son réseau domestique.

Parmi les fonctions dites avancées, on peut citer, à titre d'exemple, les fonctions suivantes:
- démarrage, arrêt ou redémarrage du service de téléphonie, accessible à l'utilisateur U1 depuis le téléphone sur IP T2;
- démarrage, arrêt ou redémarrage du partage d'imprimante T1;
- démarrage, arrêt ou redémarrage du service de télévision, accessible à l'utilisateur U1 depuis le téléviseur T3;
- diagnostic de la session en cours (telle qu'une session PPP permettant de récupérer auprès du FAI les informations de connectivité (e.g. bail DHCP incluant une adresse IP, un serveur DNS (pour "Domain Name System"), un serveur NTP (pour "Network Time Protocol"), etc.) ;
- lancement de la synchronisation (niveau physique entre la passerelle et le premier équipement géré par le fournisseur tel qu'un DSLAM (pour " Digital Subscriber Line Access Multiplexer "). La synchronisation signifie que le signal électrique peut être codé et décodé sans problème);
- renégociation des clefs de sécurité telles que les clefs WEP (pour "Wireless Encryption Privacy") utilisées pour les connexions sans fil entre les terminaux T1 à T5 et la passerelle P1.

Il est particulièrement avantageux de permettre à l'utilisateur U1 de commander simplement, par l'intermédiaire du module d'interface I1, l'ensemble de ces fonctions. En effet, par exemple, en cas d'incident sur le réseau domestique R2, il est fréquemment demandé à l'utilisateur U1 de redémarrer la passerelle P1. L'utilisateur peut désormais le faire simplement, via le module d'interface 11, en agissant sur la fonction de redémarrage de la passerelle P1. De même, l'utilisateur U1 peut ainsi facilement "activer/désactiver" un service en fonction de l'utilisation qu'il en fait, par exemple couper sa connexion Internet pendant ses vacances. Enfin, pour des raisons de sécurité, l'utilisateur U1 peut décider de désactiver certains services, comme les connexions sans fil par exemple.

Comme illustré par les flèches référencées MAJ1 et MAJ2, l'opérateur O1 peut mettre à jour le logiciel L1, ainsi que l'interface 11, à distance, par exemple lorsqu'il ajoute de nouvelles fonctionnalités à la passerelle P1. Une telle mise à jour peut se faire via des protocoles standardisés tels que COPS/COPS-PR (pour "Common Open Policy Service"/"Common Open Policy Service for PRovisioning" définis dans les recommandations RFC 2748 et RFC 3084 émises par l'IETF (pour "Internet Engineering Task Force")) ou propriétaires à base du protocole HTTP (pour "HyperText Transfer Protocol"). Lors de la connexion, la passerelle P1 contacte un serveur de version, qui lui notifie le besoin d'une mise à jour logicielle ou non. La nature des messages dépend du service ainsi que de la politique de chaque fournisseur de service.

On présente désormais plus en détail, en relation avec la figure 2, les différents éléments fonctionnels constituant la passerelle résidentielle P1.

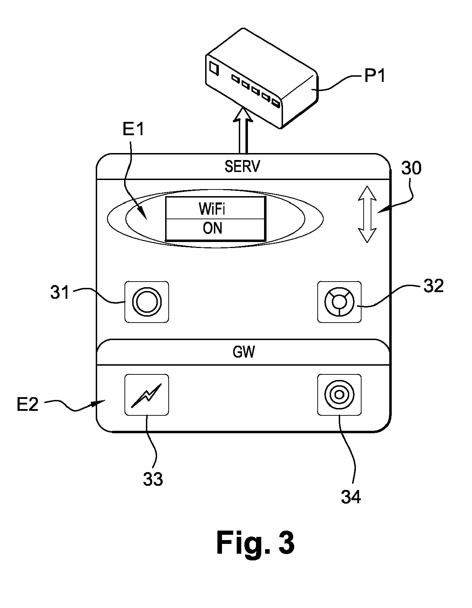

Le module d'interface 11 peut être directement positionné sur le boîtier de la passerelle P1, par exemple sous la forme de boutons avec une identification claire, d'un ensemble constitué de boutons et d'un écran, d'un module de reconnaissance vocale, ou encore d'un écran tactile avec interface graphique, comme décrit plus en détail en relation avec la figure 3. Il peut également, s'agissant d'un module d'interface I1 comprenant un écran par exemple, être déporté sur un écran dédié à la passerelle P1, qui lui est connecté par liaison filaire ou sans fil, et qui peut permettre à l'utilisateur U1 un meilleur accès au module d'interface 11, dans le cas où la passerelle P1 est située dans un endroit peu accessible. La passerelle P1 peut également comprendre plusieurs modules d'interface I1.

Le module d'interface I1 permet à l'utilisateur U1 de commander le module de gestion L1, qui peut utiliser tout type de langage de programmation. Un tel module logiciel L1 peut être enregistré sur un moyen de stockage, tel qu'une ROM, par exemple un CD ROM ou une ROM de circuit microélectronique, ou encore un moyen d'enregistrement magnétique, par exemple une disquette (floppy disc) ou un disque dur. Il peut également être incorporé dans un circuit intégré de la passerelle résidentielle P1.

Dans un mode de réalisation particulier de l'invention, dans lequel la passerelle P1 peut également être administrée par l'intermédiaire d'une interface de type Web, un tel module logiciel L1 peut comprendre un module de traduction entre l'interface I1 et le module gérant l'interface Web existante.

Lorsque l'utilisateur U1 utilise le module d'interface I1, un message de commande est émis à destination du module de gestion L1, générant une action du module de gestion L1 sur les fonctions F1 d'accès aux services et de configuration de la passerelle.

Sur réception d'une commande de l'interface I1, le module de gestion L1 peut également enregistrer, dans un espace de stockage dédié S1, les opérations effectuées par l'utilisateur U1 au travers de l'interface I1. Un tel espace de stockage S1 peut résider sur tout type de support approprié tel qu'un disque dur, ou une ROM par exemple. Le nombre d'opérations enregistrées par le module de gestion L1 sur l'espace de stockage S1 peut être limité à un nombre prédéterminé d'opérations effectuées par l'utilisateur, comme par exemple les 100 dernières opérations effectuées.

L'opérateur ou le FAI O1 peut, en cas de besoin, accéder à l'espace de stockage S1 à distance (e.g. partage de connexion, transfert FTP (pour "File Transfer Protocol"), envoi automatique vers un serveur des traces, etc.), de façon à récupérer l'historique des opérations qui y a été mémorisé.

On présente désormais, en relation avec la figure 3, un exemple de module d'interface I1 sous la forme d'un écran tactile, intégré dans le boîtier de la passerelle P1, et apte à en être dissocié, par exemple si l'utilisateur U1 choisit de disposer sa passerelle résidentielle dans un endroit peu accessible de son habitation.

Dans une partie supérieure de l'écran E1 s'affichent les services SERV sur lesquels l'utilisateur U1 peut agir. Dans l'exemple de la figure 3, le service affiché correspond à la gestion de l'interface sans fil WiFi. L'utilisateur peut afficher successivement les autres services en agissant sur la flèche 30 de pilotage du menu déroulant. La liste de ces services peut être complétée par l'opérateur O1 au travers de mises à jour.

Sous le nom du service, l'écran E1 indique l'état rapporté par la passerelle P1 (par exemple Marche/Arrét/Inconnu). Dans l'exemple de la figure 3, l'état est ON, indiquant que l'interface sans fil WiFi est active.

Après avoir sélectionné le service qu'il souhaite commander au moyen du menu déroulant 30, l'utilisateur appuie sur le bouton décrivant l'opération qu'il souhaite réaliser:
- le bouton "activer/désactiver" 31;
- le bouton "redémarrer" 32;

Dans la partie inférieure E2 de l'écran tactile, d'autres boutons plus génériques relatifs au fonctionnement de la passerelle GW P1 peuvent être proposés:
- un bouton "marche/arrêt" 34 de la passerelle P1;
- un bouton de synchronisation 33 de la connexion Internet, permettant de relancer une synchronisation de l'accès Internet de la passerelle, comme fréquemment demandé par le SAV des opérateurs et FAI en cas de problème.

D'autres boutons/éléments d'interface graphique pourraient bien sûr également être proposés sur le module d'interface I1, les exemples ci-dessus n'étant donnés qu'à titre illustratif.

Le module d'interface 11, dans un mode de réalisation de l'invention, peut également permettre à l'utilisateur de programmer le mode de fonctionnement de la passerelle, par exemple selon un mode "jour/nuit": ainsi, l'utilisateur peut choisir, pendant la période de nuit, de mettre en veille l'ensemble des services à l'exception de la téléphonie.

## Revendications

1. Passerelle (P1) d'accès à un réseau de communication (R1), apte à être connectée à au moins un équipement (T1-T5) formant avec ladite passerelle un réseau local (R2) et à offrir un accès à au moins un service au sein dudit réseau local,
**caractérisée en ce qu'**elle comprend:
- des moyens (L1) de gestion de fonctions d'accès audit au moins un service et de fonctions de configuration de ladite passerelle;
- et au moins un module d'interface (I1) au travers duquel un utilisateur de ladite passerelle est apte à commander lesdits moyens de gestion.

2. Passerelle d'accès selon la revendication 1, **caractérisée en ce qu'**elle comprend des moyens de réception d'informations de mise à jour appartenant au groupe comprenant:
- des informations (MAJ1) de mise à jour desdits moyens de gestion;
- des informations (MAJ2) de mise à jour dudit module d'interface.

3. Passerelle d'accès selon la revendication 1, **caractérisée en ce qu'**elle comprend des moyens de mémorisation (S1) d'au moins une commande effectuée par ledit utilisateur au travers dudit module d'interface.

4. Passerelle d'accès selon la revendication 1, **caractérisée en ce que** lesdits moyens de gestion sont également aptes à gérer une fonction de diagnostic d'un fonctionnement de ladite passerelle et de l'accès auxdits services.

5. Passerelle d'accès selon la revendication 1, **caractérisée en ce que** ledit module d'interface comprend un écran.

6. Passerelle d'accès selon la revendication 1, **caractérisée en ce que** ledit module d'interface comprend au moins un bouton de commande.

7. Passerelle d'accès selon la revendication 1, **caractérisée en ce que** ledit module d'interface est un module de commande vocale.
